# EUROPEAN PATENT APPLICATION

(11) **EP 4 019 903 A1**
(43) Date of publication of application: **29.06.2022**
(21) Application number: 21198497.6
(22) Date of filing: 23.09.2021
(51) Int. Cl.: G01C 21/34, G06Q 10/02, G06Q 10/10

(54) **DYNAMIC TOURIST TRAVEL PLANNER SERVICE**

(30) Priority: 22.12.2020 US 202017131612
(71) Applicant: INTEL Corporation, Santa Clara, CA 95054 (US)
(72) Inventor: RAWAT, Kalapi, Palo Alto, 94303 (US); TANRIOVER, Cagri, Portland, 97229 (US)
(74) Representative: 2SPL Patentanwälte PartG mbB

(57) **Abstract**

Various embodiments disclosed relate to an integrated travel service for producing a dynamic trip itinerary. The present disclosure includes a method including receiving input data comprising a location to be explored and a duration of a trip, retrieving information regarding the location from a travel database, producing a trip itinerary and route based on the information form the travel database, receiving an indication of initiation of the trip and tracking a location of a user during the trip, and dynamically updating the trip itinerary according to the location of the user.

## Description

### TECHNICAL FIELD

Embodiments described herein generally relate to technical field of navigation, and in particular, travel planning.

### BACKGROUND

Tourists and visitors in cities or new locations often have limited time in that location based on their travel restrictions and timeline. Often, tourists are unfamiliar with transportation in the city, sights to see, restaurants to eat at, and other attractions within a new city. In some case, tourists are in a city for only a small period of time, but would still like to see sights. For example, where a tourist has a few hours stopover at an airport, the tourist may want to leave the airport and see a few sights or get a meal in the city.

Unfortunately, tourists rarely have as much local knowledge as local persons, who have more time, flexibility, and history with the city. The tourist often has to look up sights, transportation, food and beverage, and routes himself, using a plethora of various databases, applications, or other resources. These sources of information are not integrated, so the tourist must piece together some sort of plan for himself. Additionally, once the tourist begins his tour, if unforeseen circumstances, such as traffic or wait times at attractions, occur, the tourist's plan can be thrown off, and they will have to manually re-plan his tour.

### SUMMARY OF THE DISCLOSURE

The present disclosure provides a travel service for producing a dynamically updating travel itinerary using a probability driven approach to create a dynamically changing travel itinerary. The travel service can read and sense data related to the travel location, incorporate real time updates into the produced travel itinerary, and enrich user experience based on user preferences and tracked patterns for the travel location. The travel service can make recommendations accordingly. The travel service can be run as a program on a local or cloud server, or on a computer system, and can be both client and server coordinated.

The travel service can provide a tourist friendly, automated interface for end-to-end trip planning and payment ability. The travel service can integrate public and private transportation networks with payment options into the produced dynamic travel itinerary. The travel service can produce an itinerary for the traveler's origin to destination trip, including sightseeing, food, lodging, and other requests. The travel service can provide dynamic tracking of the traveler and updated real time recommendations for more efficient routing during the course of the trip. The travel service can allow for modifications to the travel itinerary on demand. The travel service can track routes and sub-routes in the location to plan and promote new transportation modes and routes for missed attractions. The travel service can promote new modes and routes in the suggested travel itinerary.

Generally, tourists rely on do-it-yourself city guide planning, using web search tools, travel websites and applications, to obtain suggestions on day trips, travel itineraries, restaurants, hotels, and attractions. Once the tourist selects attractions and places to visit, the tourist must separately use a map program to determine the best route and order to visit the attractions. Generally, the tourist then must use a third program to coordinate transportation to those attractions, such as a rental car, public transit, or taxi. Additionally, the tourist can separately coordinate payments for various attractions, transportation, lodging, and other items. In total, the tourist uses a large number of applications, programs, websites, and other resources to plan and execute a trip itinerary.

After all this, the tourist often has to adjust the trip on the fly, depending on traffic conditions, operating hours of attractions, changes in the weather, busyness of attractions, and other factors. The tourist often adjusts the trip itinerary manually based on these factors throughout the trip. A current alternative is to book a travel agent, which is costly and still a manual, human, production of a trip itinerary without dynamic updating when factor and conditions change. Overall, tourist trip planning is highly manual, labor intensive, and time consuming. Moreover, current travel planning is difficult to apply to impromptu travel or short trips, such as in the case of cancelled or delayed flights.

The systems and methods discussed herein include an integrated travel service for producing a dynamically updating travel itinerary, including routing, attractions, transportation, and payments, depending on user inputs and preferences. The travel service can allow for statistical analysis of such trip itineraries and real time analytics. This capability can provide potential data brokerage to city for smart city planning to develop new transportation modes and routes for missed city attractions. The travel service can promote new or alternative transportation modes and routes, to alleviate congestion and traffic. The travel service can provide a potential revenue stream for collaborations with local companies and attractions.

The travel service can allow for an automated trip itinerary for tourists with integrated public and private transport networks and payment options. The travel service can include a built-in intelligence to support a traveler's origin to destination travel, sightseeing, food, lodging, and other requirements. The travel service can allow for dynamic tracking, real time recommendations for better routing, and a user ability to modify city attractions and routes on demand.

In some cases, advertisements and promotions can be used with the travel service. The travel service can be used to promote advertisement and push notifications to the tourists to increase usage of transportation hubs both public and private, new transportation modes and routes. Such advertisements can also be extended to support local businesses for promoting tourism relevant products and services, such as famous local food, gifts, dance, theater shows, and other points of attraction.

The travel service can, for example, use probability and real time data reading instead of (or, in addition to) machine learning. For example, the travel service can communicate with large amounts of already existing trend data on tourist attractions, popular places to visit, and the transportation usage in a city to calculate probabilities, timing, and routing. This provides the benefits of computation cost saving and does not necessarily rely on machine learning training delays.

In an example, a method of producing a dynamic trip itinerary can include receiving input data comprising a location to be explored and a duration of a trip, retrieving information regarding the location from a travel database, producing a trip itinerary and route based on the information form the travel database, receiving an indication of initiation of the trip and tracking a location of a user during the trip, and dynamically updating the trip itinerary according to the location of the user.

In an example, a system for producing dynamic trip itineraries can include a travel service and an application database. The travel service can be configured to receive input from a user, the input comprising data related to a trip, wherein the data includes a trip location and a trip duration, compile a suggested trip itinerary based on the input, the suggested trip itinerary including one or more stops and a route between the one or more stops, receive an indication from the user of acceptance of the trip or a suggested change to the trip itinerary, and dynamically update the trip itinerary based on real time location data of the user while the trip is in progress. The application database can be configured to communicate with the travel service to provide data related to the one or more sights and potential routes therebetween to the travel service.

### BRIEF DESCRIPTION OF THE DRAWINGS

In the drawings, which are not necessarily drawn to scale, like numerals may describe similar components in different views. Like numerals having different letter suffixes may represent different instances of similar components. The drawings illustrate generally, by way of example, but not by way of limitation, various embodiments discussed in the present document.
FIG. 1 illustrates a system for producing a trip itinerary in an example.
FIG. 2 illustrates a travel service for producing a dynamic trip itinerary in an example.
FIG. 3 illustrates a user interface for a travel service in an example.
FIG. 4 illustrates a method of producing a dynamic trip itinerary using a travel service in an example.
FIG. 5 illustrates a database map in the travel service in an example.
FIG. 6 illustrates a trip itinerary produced by the travel service in an example.
FIG. 7 illustrates a heat map produced by the travel service in an example.
FIG. 8 is a block diagram illustrating an example machine upon which any one or more of the techniques (e.g., methodologies) discussed herein may perform, according to an example embodiment.

### DETAILED DESCRIPTION

The present disclosure describes, among other things, systems and methods for producing a dynamic trip itinerary. An integrated travel service can produce a dynamic trip itinerary that includes details on timing, routing, and sightseeing. The travel service can track the user throughout the duration of the trip and dynamically update the itinerary according to real time information, such as traffic, delays, and user preferences. The travel service can integrate with payments, tickets for attractions, and coordinating transportation within a given timeframe.

The travel service can be a tourist friendly interface for automated end-to-end trip planning and payment. The travel service can use a probability based production of a trip itinerary, by reading and sensing data related to the trip itinerary. The travel service can integrate real time updates and enrich user experiences based on a set of preferences, and tracking patterns.

The travel service can provide optimized routing using public and private transportation networks in conjunction with information from a database of city attractions. The routing can include times for movement between the attractions, and time spent at each attraction. The travel service can integrate transportation information and the payment options for transportation or attractions with the produced trip itinerary.

As used herein, "application" or "program" can include a program or piece of software (and associated instructions, binary code, and distributed data) designed and written to fulfill a particular purpose of the user, such as a data analysis application.

As used herein, "attraction" or "points of interest" or "sight" can include a place of interest in a particular location, such as a museum, monument, or other place.

As used herein, "database," can refer to a structured set of data, such as held in a computer or on the internet, that can be accessible in various ways.

As used herein, "route" or "routing" can include a way or course taken in getting from a starting point to a destination, such as a course taken by car, public transit, or other methods of transportation.

As used herein, "tourist" or "visitor" can include a person who is traveling or visiting a place, such as for pleasure or business.

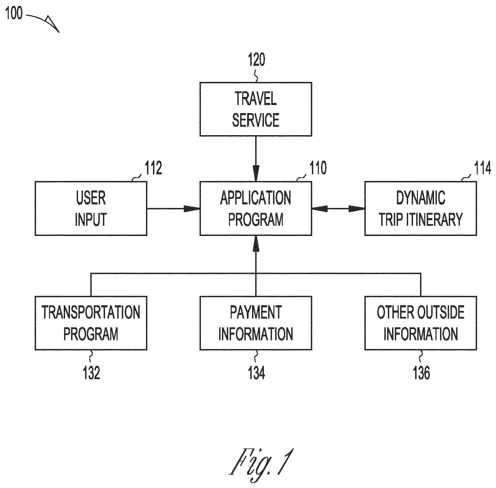

FIG. 1 illustrates a system for producing a trip itinerary in an example. The system 100 can include a travel service 110 for producing a dynamic trip itinerary. For example, the travel service 110 can be a tourist travel planner app which is presented in a tourist friendly interface for automated end to end trip planning and payment ability. The travel service 110 can use probability, statistics, and sensed real time data to enrich a user experience based on a set of preferences, tracking patterns, and recommendations.

The system 100 leveraging the travel service 110 can provide for optimized routing using public and private transportation networks, along with an efficient plan for visiting a high number of city attractions within a particular trip duration. The system 100 can consider input from the user. In some cases, the system 100 can integrate transportation network and payment options, and other payment solutions. The system 100 can support impromptu or unplanned travel decisions, in addition to pre-planned trips.

The system 100 can include the travel service 110 and an application database 120 with external sources of information 130. The travel service 110 can take in user input 112 and produce a dynamic trip itinerary 114.

The travel service 110 can be a computer program or application for use on a standard device, such as on a smart phone or tablet. The travel service 110 can be configured to receive user input 112 and produce a trip itinerary 114. In some cases, the travel service 110 can be configured to receive input from a user, such as input including data related to a trip, including trip location and trip duration, to compile a suggested trip itinerary based on the input, such as including one or more stops and a route between the one or more stops, to receive an indication from the user of acceptance of the trip or a suggested change to the trip itinerary, and to dynamically update the trip itinerary based on real time location data of the user while the trip is in progress.

The input to the travel service 110 can include the user input 112. The user input can include, for example, a location to be explored, such as a city in which a tourist will spend time. The user input can include an origin point and a destination point within that location, such as an airport, a train, bus, or ferry terminal, a street address, a hotel, other places, or combinations thereof.

The user input can include, for example, a duration of the trip. For example, the duration of the trip can be inserted as a start time and an end time of the trip itinerary, such as Monday at 9am to 4pm. In some cases, the duration of the trip can be inserted as a number of hours or days. In some cases, the user input can include personal preferences from the user, such as preferences for travel type, sightseeing, food, lodging and others.

The dynamic trip itinerary 114 output produced by the travel service 110 can include a number of features. For example, the trip itinerary 114 can include transportation, sightseeing city attractions, most visited landmarks, suggested restaurants and lodging, and other items, including suggested scheduling such as duration or reservation times for various sights. In some cases, the trip itinerary 114 can further include one or more options of trip payment, such as management by a universal wallet, for payment for transportations, attractions, or others.

Additionally, the dynamic trip itinerary 114 can include dynamic tracking. For example, the travel service can produce real time recommendations for better routing between attractions, and an ability to modify the dynamic trip itinerary 114 on demand.

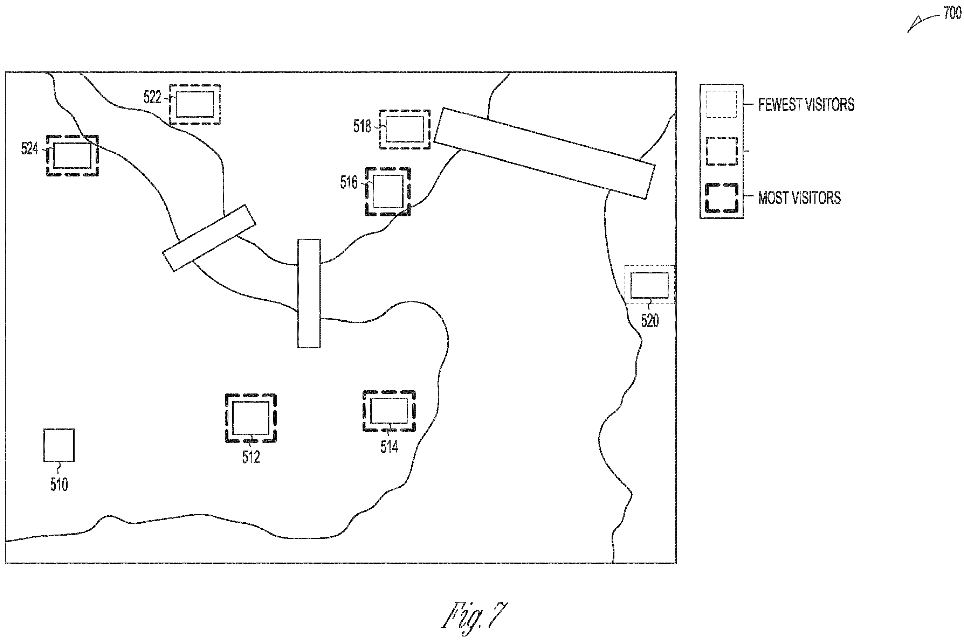

To produce the dynamic trip itinerary 114 output, the travel service 110 can work with and collect data from both the application database 120 and the external sources of information 130. The application database 120 can be, for example, one or more databases stored locally with the travel service 110. The application database 120 can include information related to local attractions, such as attractions types, names, hours, and popularity. In some cases, the application database 120 can include real time data on business of attractions, such as a heat map, an example of which is shown and discussed below with reference to FIG. 7.

The external sources of information 130 can include outside services, programs, or databases, such as data from one or more transportation networks 132, payment information 134, or other outside information 136. For example, the travel service 110 can communicate with a public transit network, a rideshare app, or a taxi service. In some cases, the travel service 110 can communicate with a mapping application, service, or website, such as to determine the roads and routes available to the user. In some cases, the travel service can communicate with maps programs that allow for real time traffic or construction updates, which can be factored into the produced suggested routing in the dynamic travel itinerary. The other outside sources of information can include one or more of maps, traffic data, sightseeing data, information about popularity of attractions, ratings of lodging or restaurants, prices of attractions, and combinations thereof.

The system 100 can optimize the produced dynamic travel itinerary based on real time data drawn from the external sources of information 130. For example, the travel service 110 can access resources provided by existing cloud solutions as a central repository, to improve probabilities of suggestions for the trip itinerary based on the user's set preferences, constraints, timing, routing, and traffic information. In some cases, information drawn from external sources can be sensed, stored, and forwarded on demand.

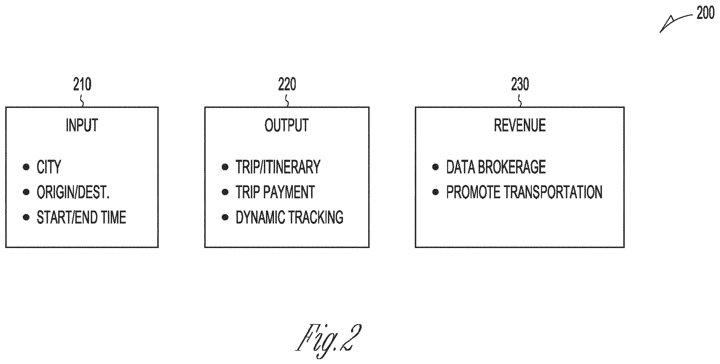

The system 100 can be used to produce a dynamic trip itinerary for a tourist, such as the dynamic trip itinerary discussed below with reference to FIGS. 2-3.

FIG. 2 illustrates a travel service 200 for producing a dynamic trip itinerary in an example. The travel service can take in inputs 210, and produce outputs 220. The travel service can include revenue areas 230.

The inputs 210 into the travel service can include, for example, the city to be explored, the origin and destination in the city, the duration in the city, the start and end time, and personal preferences for travel, sightseeing, food, and lodging. The origin and destination can include, for example, an airport, a train, bus, or ferry terminal, a street address, or a hotel. The duration in the city can, for example, include the days and hours in that location. The start and end time can be, for example, in local time for the location.

The outputs 220 of the travel service can include a trip itinerary, a trip payment, and dynamic tracking. The trip itinerary can, for example, include transportation, sightseeing, most visited landmarks, restaurants, lodging, and other items for the desired duration. The trip payment can, for example, include payment management. The dynamic tracking can include, for example, real time recommendations for better routing and an ability to modifications on demand.

The revenue areas 230 for the travel service can include, for example, harvesting data on tourist travel patterns and analytics, as a source of data brokerage for smart city planning. The revenue areas 230 can further include, for example, actively using the travel service to promote new smart city transportation and routes.

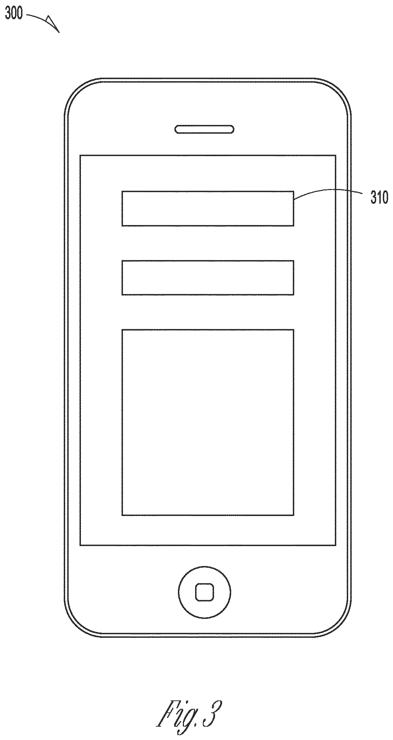

FIG. 3 illustrates a user interface for the travel service in an example. The user interface 300 can, for example, include a screen on a smart phone or a computer. The user interface can include one or more fields 310 for user inputs, such as a duration of the trip, and a location of the trip. In some cases, the location of the trip can be automatically filled out based on a real time location service, such as a global positioning system. The user interface 300 can be in communication with the travel service, the user interface 300 configured to receive the input data related to the trip from a user. The user interface 300 can be configured to communicate the produced trip itinerary to the user, such as through a screen, and graphic and/or text on the screen.

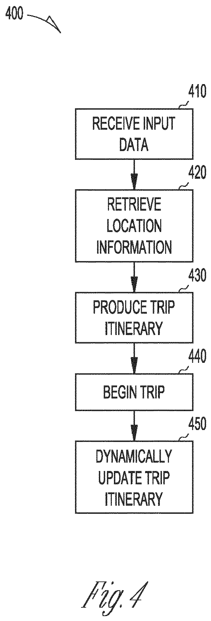

FIG. 4 illustrates a method of producing a dynamic trip itinerary using a travel service in an example. When a tourist has a limited time to visit a city, the travel service can be used to produce a dynamic trip itinerary within the bounds of that tourist's time and geographic location restrictions.

The method 400 of producing a dynamic trip itinerary can begin with the travel service receiving input data comprising a location to be explored and a duration of a trip (block 410). The location to be explored can be, for example, a city or region in which the tourist plans to be. The location to be explored can additionally include a start point and an end point, for example, the tourist may begin at a hotel and end at the airport for departure from the city. The duration of the trip can include, for example, a general length, such as four hours or two days, or in some cases can include a specific start time and end time, such as 9am to 2pm.

In some cases, the travel service can receive additional input data, such as personal preferences of the user. In some cases, the personal preferences can include preferences about lodging, such as a preference for a specific brand of hotel instead of a bed and breakfast. In some cases, the personal preferences can include preferences about cuisine, for example, the user may specify that they prefers gluten-free cuisine. In some cases, the personal preferences can include information about sightseeing, for example, the user may indicate that they prefers sporting events or museums.

Once the inputs are received by the travel service, the travel service can then collect location information desired for producing the travel itinerary (block 420). The travel service can communicate with one or more travel databases. The travel databases can include, for example, an internal application database that is locally stored with the travel service. Such an internal application database may include information related to roads, transportation methods, sightseeing, popularity of various sites or attractions, a restaurant guide, or other information specific to the city or location for which the tourist is planning a travel itinerary.

In some cases, the travel service can collect information from one or more external travel databases, such as the external sources of information discussed above with reference to FIG. 1. The travel service can, for example, communicate with and read data from one or more cloud-based services, such as a mapping program, a restaurant rating website, or another external source of information.

The travel service can retrieve this information and synthesize it. The travel service can, for example, sense, read, and store information related to the potential trip itinerary, such as the most recommended or popular sights, the quickest routes between sights, and suggested transportation modes between those sites. Overall, the travel service can produce a trip itinerary and routing information based on the information pulled from the various travel databases (step 430).

The produced dynamic travel itinerary can include a suggested schedules of sights to see and the route therebetween. In some cases, the produced dynamic travel itinerary can include a suggested route and one or more modes of transportation for that route. In some cases, the trip itinerary can further include options to book one or more sight-seeing attractions and options to purchase tickets for the sight-seeing attractions. In some cases, the produced travel itinerary can include a calculated a cost for the trip.

For example, in a scenario where a tourist has limited time to visit a city attraction, a segment of the journey, the tourist can begin at starting point A and ending point B, the destination. The travel service can calculate the time required for a one way trip by constantly reading and sensing information about routes, transportation options, and traffic, and make a probabilistic inference. Based on the input options the travel service can suggest the route and transportation options that are well suited to the tourist's trip. The travel service can suggest routing options that are doable within the time frame, and suggest where the tourist should go during the trip itinerary, and in what mode of transportation the tourist should travel to get from point A to point B. The travel service can suggest options from both private and public transportation modes, cars, buses, bikes, trains, trams, and others. In some cases, the fastest transportation option may be a combination of multiple transportation options, such as a car for a first portion, then a train for a second portion.

In some cases, the produced travel itinerary can include one or more segments. For example, the travel service can suggest a tourist attraction X to visit between the starting point A and the ending point B. In this case, the first segment of the trip would take the tourist from starting point A to attraction X, and the second segment of the trip would take the tourist from attraction X to ending point B. The travel service can suggest routes and modes of transportation for both segments. For example, the first segment can take 25 minutes by car on a freeway or can take 15 minutes by train. In this case, the travel service can suggest to the tourist to take 15 minutes by train for the first segment from starting point A to attraction X. The travel service can additionally suggest, based on average time spent at the attraction X and the assigned duration of the itinerary, that the tourist spend 1 hour at the attraction. The travel service can then produce a recommendation for the second segment of the route from the attraction X to the ending point B, such as a recommendation for a 20 minute taxi ride. Such segments may correspond to use of a mobility service provided by scheduled or on-demand transportation (including scheduling via autonomous modes of transport).

The produced travel itinerary can be presented to the user, and the user can accept the travel itinerary or request one or more changes. If the user suggests a change or removes a segment of the route, the travel service can recalibrate the suggested travel itinerary and produce a new itinerary for the user's acceptance.

The user can indicate when the travel itinerary is started to the travel service (block 440). The travel service can then track the real time location of the user during the course of the live travel itinerary (block 450). During the course of the tourist's travels, delays are possible, such as by traffic, lines at attractions, unforeseen side-tracks, and other components. Real time tracking of the user during the live travel itinerary can allow the travel service to dynamically update the itinerary during it duration (block 450).

In some cases, suggested changes can come from the user himself. In other cases, the travel service can determine that the original route from attraction X to ending point B is now 45 minutes by taxi, but 30 minutes by bus. The travel service can alert the user to this, and suggest a change in the itinerary which the user can accept or decline.

In some cases, the travel service can dynamically update the trip itinerary by changing the trip itinerary times, adding or removing stops in the trip, re-routing the route, or combinations thereof. In some cases, the travel service can update the travel itinerary by receiving data regarding traffic at the location and adjusting the trip itinerary accordingly. In some cases, the travel service can update the travel itinerary by receiving data regarding business at one or more sights and adjusting the trip itinerary accordingly.

The development of unforeseeable events can cause the travel service to dynamically update the trip itinerary. For example, accidents can happen that can cause some roads to be partially or entirely blocked, causing a significant delays in planned travel times. The travel service can access real time traffic and accident information, and re-plan the routing in the trip itinerary, even after the tourist has started the planned journey. Depending on the nature of the unexpected event, the travel service can re-route, cancel one or more previously scheduled stops at attractions, or request feedback from the user on what they would like to do.

For example, in the event of a recommended route change, the user can be informed in real time on where to get off of public transit and where to switch to the new route. The new route can be done in connection with proximity to the original route. In this way, the travel service can act as a "watchdog" of the routing in real-time to help the user focus on enjoying his tour without having to worry about time. The notifications of changes to the itinerary can be pushed to the user's device in real time.

The travel service can, for example, use probability and real-time data reading and analysis instead of application of machine learning inferences. For example, the travel service can communicate with large amounts of already exiting trend data on tourist attractions, popular places to visit, and the transportation usage in a city to calculate probabilities, timing, and routing. This is computationally cost saving as such analysis does not necessarily rely on machine training delays, or the use of multiple machine learning models trained on different data inputs.

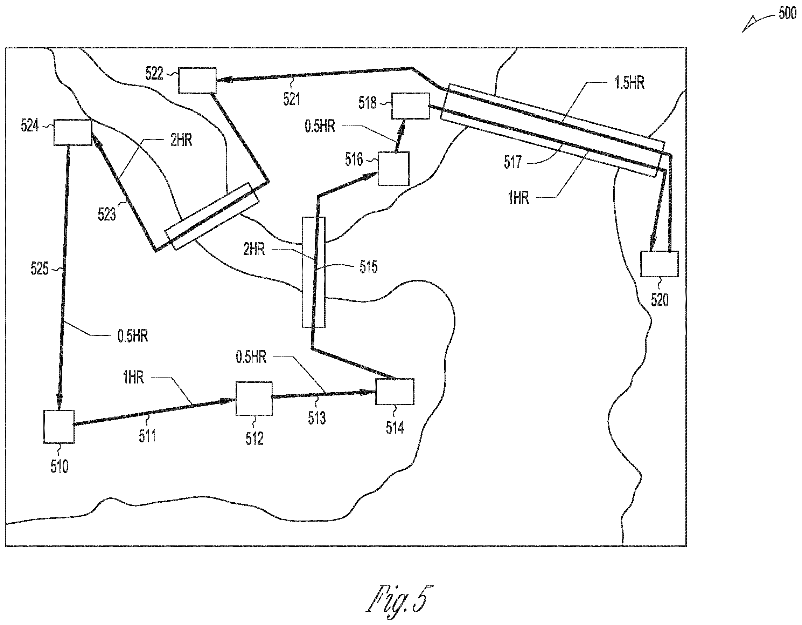

FIG. 5 illustrates a database map in the travel service in an example. The database map 500 can be, for example, a map included in the application database stored locally with the travel service. The database map 500 can include the airport 510, attractions 512, 514, 516, 518, 520, 522, and 524, routes 511, 513, 515, 517, 521, 523, 525, and 527.

The airport 510 can, in some cases, serve as a start and/or end point when the travel service uses the database map 500 to produce a suggested dynamic travel itinerary for a tourist visiting this city.

The attractions 512, 514, 516, 518, 520, 522, and 524, can include many various points of interest around the city. For example, they can include museums, shows, monuments, or other places. In the database map 500, the travel service can store and keep information on these attractions, such as hours of operations, popularity, and pricing.

The routes 511, 513, 515, 517, 519, 521, 523, 525, and 527 can include routes between the various attractions, such as by road, car, bus, train, ferry, or other modes of transportation. In example database map 500, routes 515, 517, and 523 are across bridges. In sample database map 500, the routes shown can be by car, but underground metro links and boat access may also be present in this city.

Such a database map 500 can be used to plan a dynamic trip itinerary for a tourist in the city. For example, using example database map 500, the travel service can start with the reference routes 511, 513, 515, 517, 519, 521, 523, 525, and 527, that can allow a tourist to start a journey at the airport 510 and visit each of the seven attractions 512, 514, 516, 518, 520, 522, and 524, and eventually return to the airport 510. Each of the routes 511, 513, 515, 517, 519, 521, 523, 525, and 527 can have an estimate travel time as shown in FIG. 5.

For example, the route 511 between the airport 510 and attraction 512 can take about 1 hour by car. However, these time estimates can be continuously updated by the travel service based on real time traffic information, such as from an external maps source that the travel service scraps data from. Travel times can vary, for example, based on accidents, construction, rush hour and other events.

In the example database map 500, each of the attractions 512, 514, 516, 518, 520, 522, and 524, can be associated with an average time that visitors spend at that attraction. The database can also incorporate feedback from visitors, as well as administrations of those attractions, and popularity of those attractions. When the travel service produces a travel itinerary, it can indicate to the user how much time is suggested to be spent at each attraction based on information from the database map 500. For example, attraction 518 has an average visitor time of 1 hour.

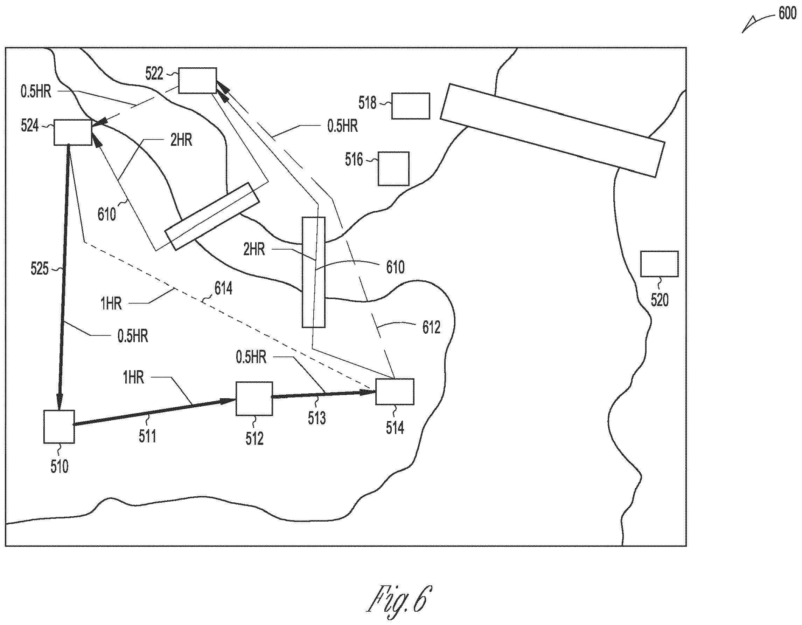

In example database map 500, if a user was to complete the entire tour shown in the database map 500, the tourist would spend about 6.5 hours in all of the attractions and about 9 hours on the road. This can be quite long. Thus, an example using this database map 500 to produce a personalized travel itinerary is shown and discussed with reference to FIG. 6 below.

FIG. 6 illustrates a trip itinerary 600 produced by the travel service in an example. The trip 600 can be produced for a specific tourist, such as traveler Alice who has just arrived at the airport 510. In an example, Alice can determine her flight is delayed and wish to see the city in her limited time of about 7 hours in that city. This is not sufficient time to see every attraction in the database map 500, but it is time enough to see a few sites instead of waiting at the airport for the next flight.

Alice can open the travel service and input her preferences. For example, she can input her time duration of 7 hours, and indicate the city she is in. She can indicate the airport 510 is her starting point and ending point, and indicate what time she wants to return to the airport by to catch her delayed flight. Alice might have no idea about attractions in the city, but she can input some preferences, for example, she can indicate that she would like to get lunch, and indicate that she prefers museums and cultural sites.

After receiving the details of her preferences, the travel service can look through the database map 500, and optionally one or more external sources of information, and produce one or more potential dynamic travel itineraries such as described with reference to FIG. 4 above.

In an example, because Alice only has 7 hours, the travel service can reduce the reference database map 500 to a few options as shown in FIG. 6. Based on the time for the trip itinerary, the travel service can further remove the attractions 516, 518, and 520 from contention due to the time spent on the road and at those attractions being too long for the duration of the trip.

For the remaining attractions, the travel service can create new routes between them to get Alice back to the airport 510 on time. For the first route 610, travel can be by car only. For the second route 612, the travel can be by a combination of various travel options, such as by public transit. For the first route 610, travel would take about 2.5 hours longer to travel by car. The travel service can, for example, suggest the second route 612, which would be 3.5 hours on the road and 2.5 hours in the attractions, to increase the percent of time Alice can spend in the attractions.

If the second route 612 is taken, the travel service can indicate that a ferry or water route to attraction 522 would be sufficiently quicker than driving across the bridge. Similarly, a water route can be taken from attraction 522 to attraction 524 to save 1.5 hours. The time saving nature of the ferry or water routes can allow Alice to get to attraction 522 and still make it back to the airport 510 in time to catch her flight.

Alternatively, the third route 614 can skip attraction 522 and go straight to attraction 524 from attraction 514. This third route would save 4.5 hours for Alice, such as if she has even less time. The travel service can improve the number of attractions and time spent at attractions relative the travel time. The travel service can recommend the most appropriate route and itinerary based on Alice's inputs.

The travel service can additionally suggest to when Alice should return to the airport 510. For example, the travel service may suggest, based on data about the airport 510 from external sources, that Alice return to the airport with an hour to spare. In this way, the travel service can make more realistic itineraries factoring in the end point and flight schedule.

Additionally, the travel service can coordinate or schedule transportation for Alice. For example, the travel service can communicate with an external ride share or taxi service, including on-demand autonomous vehicle services. In some cases, the travel service can be associated with a specific fleet or company of such cars that can integrate with the travel service. The fleet cars can be scheduled according to a dynamically updated travel itinerary, and payment can be coordinated through the travel service. A fleet car can be waiting for Alice at each point during her journey according to the dynamically updating travel itinerary at each attraction when she is scheduled to depart. This can allow for flexibility as Alice may not need to separately hail a cab or coordinate transportation.

FIG. 7 illustrates a heat map 700 produced by the travel service in an example. In some cases, the travel service and the application database can be used to construct a heat maps of attractions in the city. For example, the travel service can, by using the database and/or external information, produce one or more color-coded maps of attractions in the city indicating which attractions are the most popular. A color-coded key is shown in map 700 as key 710.

Here, well-travelled or "hot" attractions can appear as red, such as attractions 512, 514, and 516. When a tourist is using the travel service to plan a dynamic trip itinerary, they can indicate whether they would like to visit more popular attractions. If the tourist would like to attend less popular attractions, they can indicate that based on the heat map. Such a heat map can also be indicative of the popularity of attractions for city staff and tourist offices in the area. The data provided from this kind of map can be used, for example, in city planning an infrastructure maintenance, as desired to increase tourism in the area.

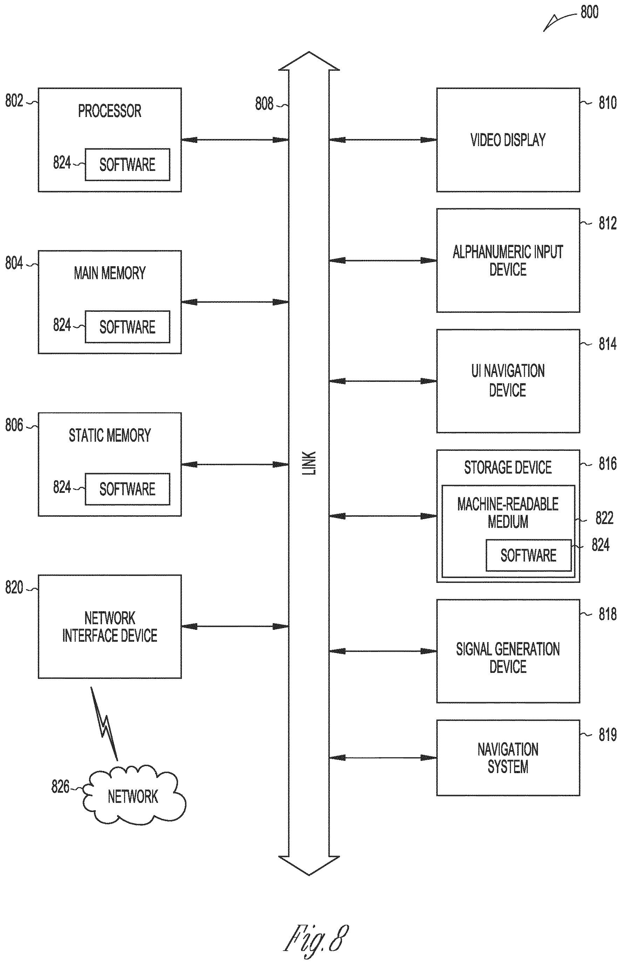

FIG. 8 is a block diagram of a typical, general-purpose computer that may be programmed into a special purpose computer suitable for implementing one or more examples of the manifest record generating program disclosed herein. The travel service can be, for example, a user application such as a mobile app, a car dashboard, or a computing device of a transportation modality. Tourist information can be visualized on a screen, such as a touch screen.

FIG. 8 is a block diagram illustrating a machine in the example form of a computer system 800, within which a set or sequence of instructions may be executed to cause the machine to perform any one of the methodologies discussed herein, according to an example embodiment. In alternative embodiments, the machine operates as a standalone device or may be connected (e.g., networked) to other machines. In a networked deployment, the machine may operate in the capacity of either a server or a client machine in server-client network environments, or it may act as a peer machine in peer-to-peer (or distributed) network environments. The machine may be a wearable device, personal computer (PC), a tablet PC, a hybrid tablet, a personal digital assistant (PDA), a mobile telephone, or any machine capable of executing instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein. Similarly, the term "processor-based system" shall be taken to include any set of one or more machines that are controlled by or operated by a processor (e.g., a computer) to individually or jointly execute instructions to perform any one or more of the methodologies discussed herein.

Example computer system 800 includes at least one processor 802 (e.g., a central processing unit (CPU), a graphics processing unit (GPU) or both, processor cores, compute nodes, etc.), a main memory 804 and a static memory 806, which communicate with each other via a link 808 (e.g., bus). The computer system 800 may further include a video display unit 810, an alphanumeric input device 812 (e.g., a keyboard), and a user interface (UI) navigation device 814 (e.g., a mouse). In one embodiment, the video display unit 810, input device 812 and UI navigation device 814 are incorporated into a touch screen display. The computer system 800 may additionally include a storage device 816 (e.g., a drive unit), a signal generation device 818 (e.g., a speaker), a network interface device 820, and one or more sensors (not shown), such as a global positioning system (GPS) sensor, compass, accelerometer, gyrometer, magnetometer, barometer, temperature sensor or other sensors.

In an example embodiment, the computer system 800 may further include a navigation system 819, which may have functionalities similar to the navigation system 102 described in reference to FIG. 1.

The storage device 816 includes a machine-readable medium 822 on which is stored one or more sets of data structures and instructions 824 (e.g., software) embodying or utilized by any one or more of the methodologies or functions described herein. The instructions 824 may also reside, completely or at least partially, within the main memory 804, static memory 806, and/or within the processor 802 during execution thereof by the computer system 800, with the main memory 804, static memory 806, and the processor 802 also constituting machine-readable media.

While the machine-readable medium 822 is illustrated in an example embodiment to be a single medium, the term "machine-readable medium" may include a single medium or multiple media (e.g., a centralized or distributed database, and/or associated caches and servers) that store the one or more instructions 824. The term "machine-readable medium" shall also be taken to include any tangible medium that is capable of storing, encoding or carrying instructions for execution by the machine and that cause the machine to perform any one or more of the methodologies of the present disclosure or that is capable of storing, encoding or carrying data structures utilized by or associated with such instructions. The term "machine-readable medium" shall accordingly be taken to include, but not be limited to, solid-state memories, and optical and magnetic media. Specific examples of machine-readable media include non-volatile memory, including but not limited to, by way of example, semiconductor memory devices (e.g., electrically programmable read-only memory (EPROM), electrically erasable programmable read-only memory (EEPROM)) and flash memory devices; magnetic disks such as internal hard disks and removable disks; magneto-optical disks; and CD-ROM and DVD-ROM disks.

The instructions 824 may further be transmitted or received over a communications network 826 using a transmission medium via the network interface device 820 utilizing any one of a number of well-known transfer protocols (e.g., HTTP). Examples of communication networks include a local area network (LAN), a wide area network (WAN), the Internet, mobile telephone networks, plain old telephone (POTS) networks, and wireless data networks (e.g., Bluetooth, Wi-Fi, 3G, and 4G LTE/LTE-A, LoRa/LoRaWAN, or satellite communication networks). The term "transmission medium" shall be taken to include any intangible medium that is capable of storing, encoding, or carrying instructions for execution by the machine, and includes digital or analog communications signals or other intangible medium to facilitate communication of such software.

It should be further understood that software including one or more computer-executable instructions that facilitate processing and operations as described above with reference to any one or all of steps of the disclosure may be installed in and sold with one or more servers and/or one or more routers and/or one or more devices within consumer and/or producer domains consistent with the disclosure. Alternatively, the software may be obtained and loaded into one or more servers and/or one or more routers and/or one or more devices within consumer and/or producer domains consistent with the disclosure, including obtaining the software through physical medium or distribution system, including, for example, from a server owned by the software creator or from a server not owned but used by the software creator. The software may be stored on a server for distribution over the Internet, for example.

Also, it will be understood by one skilled in the art that this disclosure is not limited in its application to the details of construction and the arrangement of components set forth in the description or illustrated in the drawings. The examples herein are capable of other examples, and capable of being practiced or carried out in various ways. Also, it will be understood that the phraseology and terminology used herein is for the purpose of description and should not be regarded as limiting. The use of "including," "comprising," or "having" and variations thereof herein is meant to encompass the items listed thereafter and equivalents thereof as well as additional items. Unless limited otherwise, the terms "connected," "coupled," and "mounted," and variations thereof herein are used broadly and encompass direct and indirect connections, couplings, and mountings. In addition, the terms "connected" and "coupled" and variations thereof are not restricted to physical or mechanical connections or couplings. Further, terms such as up, down, bottom, and top are relative, and are employed to aid illustration, but are not limiting.

The components of the illustrative devices, systems and methods employed in accordance with the illustrated examples may be implemented, at least in part, in digital electronic circuitry, analog electronic circuitry, or in computer hardware, firmware, software, or in combinations of them. These components may be implemented, for example, as a computing program product such as a computing program, program code or computer instructions tangibly embodied in an information carrier, or in a machine-readable storage device, for execution by, or to control the operation of, data processing apparatus such as a programmable processor, a computer, or multiple computers.

A computing program may be written in any form of programming language, including compiled or interpreted languages, and it may be deployed in any form, including as a stand-alone program or as a module, component, subroutine, or other unit suitable for use in a computing environment. A computing program may be deployed to be executed on one computer or on multiple computers at one site or distributed across multiple sites and interconnected by a communication network. Also, functional programs, codes, and code segments for accomplishing the techniques described herein may be easily construed as within the scope of the present disclosure by programmers skilled in the art. Method steps associated with the illustrative examples may be performed by one or more programmable processors executing a computing program, code, or instructions to perform functions (e.g., by operating on input data and/or generating an output). Method steps may also be performed by, and apparatus may be implemented as, special purpose logic circuitry, e.g., an FPGA (field programmable gate array) or an ASIC (application-specific integrated circuit), for example.

The various illustrative logical blocks, modules, and circuits described in connection with the examples disclosed herein may be implemented or performed with a general-purpose processor, a digital signal processor (DSP), an ASIC, a FPGA or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

Processors suitable for the execution of a computing program include, by way of example, both general and special purpose microprocessors, and any one or more processors of any kind of digital computer. Generally, a processor will receive instructions and data from a read-only memory or a random-access memory or both. The essential elements of a computer are a processor for executing instructions and one or more memory devices for storing instructions and data. Generally, a computer will also include, or be operatively coupled to receive data from or transfer data to, or both, one or more mass storage devices for storing data, e.g., magnetic, magneto-optical disks, or optical disks. Information carriers suitable for embodying computing program instructions and data include all forms of non-volatile memory, including by way of example, semiconductor memory devices, e.g., electrically programmable read-only memory or ROM (EPROM), electrically erasable programmable ROM (EEPROM), flash memory devices, and data storage disks (e.g., magnetic disks, internal hard disks, or removable disks, magneto-optical disks, and CD-ROM and DVD-ROM disks). The processor and the memory may be supplemented by or incorporated in special purpose logic circuitry.

Those of skill in the art understand that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

Those of skill in the art further appreciate that the various illustrative logical blocks, modules, circuits, and algorithm steps described in connection with the examples disclosed herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the disclosure. A software module may reside in random access memory (RAM), flash memory, ROM, EPROM, EEPROM, registers, hard disk, a removable disk, a CD-ROM, or any other form of storage medium known in the art. An exemplary storage medium is coupled to the processor such the processor may read information from, and write information to, the storage medium. In the alternative, the storage medium may be integral to the processor. In other words, the processor and the storage medium may reside in an integrated circuit or be implemented as discrete components.

As used herein, "machine-readable medium" means a device able to store instructions and data temporarily or permanently and may include, but is not limited to, random-access memory (RAM), read-only memory (ROM), buffer memory, flash memory, optical media, magnetic media, cache memory, other types of storage (e.g., Erasable Programmable Read-Only Memory (EEPROM)), and/or any suitable combination thereof. The term "machine-readable medium" should be taken to include a single medium or multiple media (e.g., a centralized or distributed database, or associated caches and servers) able to store processor instructions. The term "machine-readable medium" shall also be taken to include any medium, or combination of multiple media, that is capable of storing instructions for execution by one or more processors, such that the instructions, when executed by one or more processors cause the one or more processors to perform any one or more of the methodologies described herein. Accordingly, a "machine-readable medium" refers to a single storage apparatus or device, as well as "cloud-based" storage systems or storage networks that include multiple storage apparatus or devices. The term "machine-readable medium" as used herein excludes signals per se.

### Various Notes & Examples

Example 1 is a computing system, comprising: a storage device, comprising a data store to maintain travel information; processing circuitry; and a memory device comprising instructions embodied thereon, wherein the instructions, when executed by the processing circuitry, configure the processing circuitry to perform operations comprising: receiving input data comprising a location to be explored and a duration of a trip; retrieving information regarding the location from the data store; producing a trip itinerary and route, with a mobility service, based on the information from the travel database; receiving an indication of initiation of the trip and trip location updates; and dynamically updating the trip itinerary with the mobility service according to the tracked location of the user.

In Example 2 the subject matter of Example 1 optionally includes subject matter where the location to be explored comprises a start point and an end point.

In Example 3 the subject matter of any one or more of Examples 1-2 optionally includes wherein the duration of the trip comprises a start time and an end time.

In Example 4 the subject matter of any one or more of Examples 1-3 optionally includes wherein the input data further comprises personal preferences of the user, wherein the personal preferences comprise at least one of transportation lodging, sightseeing, and cuisine.

In Example 5 the subject matter of any one or more of Examples 1-4 optionally includes wherein producing the trip itinerary and route and dynamically updating the trip itinerary further comprises coordinating the trip itinerary with a public transit service.

In Example 6 the subject matter of any one or more of Examples 1-5 optionally includes wherein producing the trip itinerary and route and dynamically updating the trip itinerary further comprises scheduling an autonomous vehicle service for use with the trip itinerary.

In Example 7 the subject matter of any one or more of Examples 1-6 optionally includes wherein producing a trip itinerary comprises producing a suggested schedules of sights to see and the route therebetween.

In Example 8 the subject matter of any one or more of Examples 1-7 optionally includes wherein producing a trip itinerary comprises suggesting the route and one or more modes of transportation for that route.

In Example 9 the subject matter of any one or more of Examples 1-8 optionally includes wherein producing a trip itinerary further comprises booking one or more sight-seeing attractions and producing tickets for the sight-seeing attractions.

In Example 10 the subject matter of any one or more of Examples 1-9 optionally includes wherein producing a trip itinerary further comprises calculating a cost for the trip.

In Example 11 the subject matter of any one or more of Examples 1-10 optionally includes further comprising receiving an indication of acceptance of the trip itinerary and route prior to receiving an indication of initiation of the trip.

In Example 12 the subject matter of any one or more of Examples 1-11 optionally includes further comprising receiving an indication of a suggested change to the trip itinerary and route prior and producing an altered trip itinerary and router accordingly.

In Example 13 the subject matter of any one or more of Examples 1-12 optionally includes wherein dynamically updating the trip itinerary comprises changing times in the trip itinerary, adding or removing stops in the trip itinerary, re-routing the route, or combinations thereof.

In Example 14 the subject matter of any one or more of Examples 1-13 optionally includes wherein dynamically updating the trip itinerary comprises receiving data regarding traffic at the location and adjusting the trip itinerary accordingly.

In Example 15 the subject matter of any one or more of Examples 1-14 optionally includes wherein dynamically updating the trip itinerary comprises receiving data regarding business at one or more sights and adjusting the trip itinerary accordingly.

Example 16 is a non-transitory computer-readable medium that stores instructions that when executed by at least one processor cause the at least one processor to perform operations comprising: receiving input data comprising a location to be explored and a duration of a trip; retrieving information regarding the location from a travel database; producing a trip itinerary and route based on the information form the travel database; receiving an indication of initiation of the trip and tracking a location of a user during the trip; and dynamically updating the trip itinerary according to the location of the user.

In Example 17 the subject matter of Example 16 optionally includes further comprising receiving an indication of acceptance of the trip itinerary and rout prior to receiving an indication of initiation of the trip.

In Example 18 the subject matter of any of Examples 16-17 optionally includes receiving an indication of a suggested change to the trip itinerary and route prior and producing an altered trip itinerary and route accordingly.

In Example 19 the subject matter of any of Examples 16-18 optionally includes subject matter where dynamically updating the trip itinerary comprises changing times in the trip itinerary, adding or removing stops in the trip itinerary, re-routing the route, or combinations thereof.

In Example 20 the subject matter of any of Examples 16-19 optionally includes subject matter where dynamically updating the trip itinerary comprises receiving data regarding traffic at the location and adjusting the trip itinerary accordingly.

In Example 21 the subject matter of any of Examples 16-20 optionally includes further comprising coordinating with a public transit service or scheduling an autonomous vehicle service.

Example 22 is a system for producing dynamic trip itineraries, the system comprising: a travel service configured to: receive input from a user, the input comprising data related to a trip, wherein the data includes a trip location and a trip duration; aggregate a suggested trip itinerary based on the input, the suggested trip itinerary including one or more stops and a route between the one or more stops; receive an indication from the user of acceptance of the trip or a suggested change to the trip itinerary; and dynamically update the trip itinerary based on real time location data of the user while the trip is in progress; and storage device configured to communication with the travel service to provide data related to one or more sights and potential routes therebetween to the travel service.

In Example 23 the subject matter of Example 22 optionally includes further comprising one or more outside sources of information configured to provide additional data to the travel service.

In Example 24 the subject matter of any of Examples 22-23 optionally includes subject matter where the one or more outside sources of information comprises maps, traffic data, sightseeing data, information about popularity of attractions, ratings of lodging or restaurants, prices of attractions, and combinations thereof.

In Example 25. the subject matter of any of Examples 20-24 optionally includes subject matter where the travel service is further configured to coordinate with a public transit service or schedule an autonomous vehicle service.

Each of these non-limiting examples can stand on its own, or can be combined in various permutations or combinations with one or more of the other examples.

The above detailed description includes references to the accompanying drawings, which form a part of the detailed description. The drawings show, by way of illustration, specific embodiments in which the invention can be practiced. These embodiments are also referred to herein as "examples." Such examples can include elements in addition to those shown or described. However, the present inventors also contemplate examples in which only those elements shown or described are provided. Moreover, the present inventors also contemplate examples using any combination or permutation of those elements shown or described (or one or more aspects thereof), either with respect to a particular example (or one or more aspects thereof), or with respect to other examples (or one or more aspects thereof) shown or described herein.

In the event of inconsistent usages between this document and any documents so incorporated by reference, the usage in this document controls.

In this document, the terms "a" or "an" are used, as is common in patent documents, to include one or more than one, independent of any other instances or usages of "at least one" or "one or more." In this document, the term "or" is used to refer to a nonexclusive or, such that "A or B" includes "A but not B," "B but not A," and "A and B," unless otherwise indicated. In this document, the terms "including" and "in which" are used as the plain-English equivalents of the respective terms "comprising" and "wherein." Also, in the following claims, the terms "including" and "comprising" are open-ended, that is, a system, device, article, composition, formulation, or process that includes elements in addition to those listed after such a term in a claim are still deemed to fall within the scope of that claim. Moreover, in the following claims, the terms "first," "second," and "third," etc. are used merely as labels, and are not intended to impose numerical requirements on their objects.

The above description is intended to be illustrative, and not restrictive. For example, the above-described examples (or one or more aspects thereof) may be used in combination with each other. Other embodiments can be used, such as by one of ordinary skill in the art upon reviewing the above description. The Abstract is provided to comply with 37 C.F.R. §1.72(b), to allow the reader to quickly ascertain the nature of the technical disclosure. It is submitted with the understanding that it will not be used to interpret or limit the scope or meaning of the claims. Also, in the above Detailed Description, various features may be grouped together to streamline the disclosure. This should not be interpreted as intending that an unclaimed disclosed feature is essential to any claim. Rather, inventive subject matter may lie in less than all features of a particular disclosed embodiment. Thus, the following claims are hereby incorporated into the Detailed Description as examples or embodiments, with each claim standing on its own as a separate embodiment, and it is contemplated that such embodiments can be combined with each other in various combinations or permutations. The scope of the invention should be determined with reference to the appended claims, along with the full scope of equivalents to which such claims are entitled.

## Claims

1. A computing system, comprising:
a storage device, comprising a data store to maintain travel information;
processing circuitry; and
a memory device comprising instructions embodied thereon, wherein the instructions, when executed by the processing circuitry, configure the processing circuitry to perform operations comprising:
receiving input data comprising a location to explore and a duration of a trip;
retrieving information regarding the location from the data store;
producing a trip itinerary and route, with a mobility service, based on the information from the travel database;
receiving an indication of initiation of the trip and trip location updates; and
dynamically updating the trip itinerary with the mobility service according to a tracked location of the user.

2. The computing system of claim 1, wherein the location to explore comprises a start point and an end point.

3. The computing system of one of the previous claims, wherein the duration of the trip comprises a start time and an end time.

4. The computing system of one of the previous claims, wherein the input data further comprises personal preferences of the user, wherein the personal preferences comprise at least one of transportation lodging, sightseeing, and cuisine.

5. The computing system of one of the previous claims, wherein producing the trip itinerary and route and dynamically updating the trip itinerary further comprises coordinating the trip itinerary with a public transit service or operator.

6. The computing system of one of the previous claims, wherein producing the trip itinerary and route and dynamically updating the trip itinerary further comprises scheduling an autonomous vehicle service for use with the trip itinerary.

7. The computing system of one of the previous claims, wherein producing a trip itinerary comprises producing a suggested schedules of sights to see and the route to the sights.

8. The computing system of one of the previous claims, wherein producing a trip itinerary comprises suggesting the route and one or more modes of transportation for that route.

9. The computing system of one of the previous claims, wherein producing a trip itinerary further comprises booking one or more sight-seeing attractions and generating tickets for the sight-seeing attractions.

10. The computing system of one of the previous claims, wherein producing a trip itinerary further comprises calculating a cost of transportation for the trip.

11. The computing system of one of the previous claims, further comprising receiving an indication of acceptance of the trip itinerary and route prior to receiving an indication of initiation of the trip.

12. The computing system of one of the previous claims, further comprising receiving an indication of a suggested change to the trip itinerary and prior route and producing an alternate trip itinerary and route.

13. The computing system of one of the previous claims, wherein dynamically updating the trip itinerary comprises changing times in the trip itinerary, adding or removing stops in the trip itinerary, re-routing the route, or combinations thereof.

14. At least one non-transitory computer-readable medium comprising instructions that, when executed by at least one processor, cause the at least one processor to perform operations comprising:
receiving input data comprising a location to be explored and a duration of a trip;
retrieving information regarding the location from a data store;
producing a trip itinerary and route, with a mobility service, based on the information from a travel database;
receiving an indication of initiation of the trip and trip location updates; and
dynamically updating the trip itinerary with the mobility service according to a tracked location of the user.

15. A system for producing dynamic trip itineraries, the system comprising:
processing circuitry operating a travel service configured to:
receive input from a user, the input comprising data related to a trip, wherein the data includes a trip location and a trip duration;
aggregate a suggested trip itinerary based on the input, the suggested trip itinerary including one or more stops and a route between the one or more stops and including a suggest mobility service;
receive an indication from the user of acceptance of the trip or a suggested change to the trip itinerary; and
dynamically update the trip itinerary based on real time location data of the user while the trip is in progress; and
a communication interface, operably coupled to the processing circuitry, the communication interface configured to transmit provide data related to one or more sights and potential routes to the one or more sights to the travel service.
